# EUROPÄISCHE PATENTSCHRIFT

(11) **EP 1 847 368 B1**
(45) Veröffentlichungstag und Bekanntmachung des Hinweises auf die Patenterteilung: **25.02.2009**
(21) Anmeldenummer: 06118357.0
(22) Anmeldetag: 03.08.2006
(51) Int. Cl.: B29C 35/08, B29C 71/04, B05D 3/06, B01J 19/12, B01J 19/14

(54) **Verfahren und Vorrichtung zum Strahlungshärten**
Method and device for radiation hardening
Procédé et dispositif de durcissage par rayonnement

(30) Priorität: 07.04.2006 DE 102006016500
(43) Veröffentlichungstag der Anmeldung: 24.10.2007
(73) Patentinhaber: Linde AG, 80807 München (DE)
(72) Erfinder: Wolf, Erich, 82049 Pullach (DE); Orsén, Mikael L., 231 36 Trelleborg (SE)
(74) Vertreter: Ganahl, Bernhard

(56) Entgegenhaltungen:
- EP-A2- 0 415 508
- WO-A-02/32641
- DE-A1- 3 427 315
- DE-A1- 10 153 878
- DE-A1- 19 820 366
- DE-A1- 19 957 900
- US-A- 3 985 100

## Beschreibung

Die Erfindung betrifft ein Verfahren und eine Vorrichtung zum Strahlungshärten.

Aus der WO 02/32641 A1 und der Veröffentlichung Erich Beck et. al., "UV-curing in Carbon Dioxide" geht ein Verfahren zum Strahlungshärten hervor, in dem einseitig offene Behälter verwendet werden, die je nach Inertgas unten oder oben offen sind. In diese Behälter werden die zu bestrahlenden Bauteile eingefügt. Hierbei werden die mit einer zu härtenden Beschichtung versehenen Teile nacheinander durch einen Eingangsbereich, eine Strahlungskammer und einen Ausgangsbereich durchgeführt, wobei die Strahlungskammer mit wenigstens einem Strahler für Härtungsstrahlen sowie mit einer Gaszuführung zum Einleiten von Inertgas versehen ist.

Bei der WO 02/32641 soll der Sauerstoffeintrag in die Strahlungskammer vermieden werden, da Reaktionen mit Sauerstoff beim Härten unerwünscht sind und zu schlechten Ergebnissen führen. Hierfür wird die Strahlungskammer als Turm ausgebildet, der in einem unteren Abschnitt mit dem Eingangsbereich und dem Ausgangsbereich verbunden ist und in dessen Oberabschnitt der Strahler angeordnet ist. Die Teile werden in der Bestrahlungskammer somit von unten nach oben geführt, wobei die Strahlungskammer nur nach unten geöffnet ist. Hierdurch sollen konvektive oder turbulente Gasströmung vermieden werden, die im Stand der Technik zum Entweichen von Inertgas und Eintritt von Sauerstoff führen sollen. Das Inertgas soll kontinuierlich in den Oberabschnitt der Strahlungskammer eingeleitet werden und dort ein Verdrängungspolster gegen Sauerstoffbereiche des Gases ausbilden. Ferner ist es möglich Gasvorhänge vorzusehen.

Aus der DE 10153878 B4 ist eine Anlage zum Strahlungshärten mit einer Strahlungskammer bekannt, die einen mit wenigstens einem Strahler für Härtungsstrahlen versehenen Strahlungsbereich, sowie seitlich hierzu jeweils einen Eingangs- und Ausgangsbereich zum Herein- bzw. Herausführen von mit einer zu härtenden Beschichtung versehenen Teilen aufweist. Der Eingangsbereich und/oder der Ausgangsbereich sind als Inertgasschleusen ausgebildet, mit einem äußeren Mantelrohr und einem unter Ausbildung eines Ringspalts beabstandet vom äußeren Mantelrohr angeordneten Innenmantelrohr, das auf seiner dem Strahlungsbereich abgewandten Seite im Wesentlichen strömungsdicht mit dem äußeren Mantelrohr verbunden ist, wobei der Ringspalt mit wenigstens einer Gaszuführung für einen Inertgasstrom verbunden ist. Eine Strahlungskammer nach diesem Stand der Technik besitzt eine Einrichtung, mit der das Inertgas in die Strahlungskammer eingeleitet wird, wobei im Bodenbereich der Strahlungskammer eine Gasableitung zum Abführen von verunreinigtem oder mit eindringendem Sauerstoff vermischtem Gas vorhanden ist. Um die Sauerstoffkonzentration in der Strahlungskammer weiter zu reduzieren, ist sowohl im Eingangs- als auch im Ausgangsbereich jeweils eine Inertgas-Schleuse vorgesehen.

Nachteilig bei dem Verfahren des Standes der Technik ist, dass die vorhandenen Schleusen und Zuführ- und bzw. Abführsysteme den Zutritt bzw. das Nachströmen von Luftsauerstoff und eine schleichende Verunreinigung der Atmosphäre nicht unterbinden können. Zudem muss permanent eine große Menge an Inertgas nachgeführt werden, die dann an den Gasschleusen zum Beispiel entweichen kann. Die Verfahren sind somit relativ unwirtschaftlich.

Ergänzend wird und auf die DE 19 957 900 A1 hingewiesen.

Aufgabe der Erfindung ist es, ein Verfahren zum Strahlungshärten zu schaffen bei dem der Inertgasbedarf reduziert und der Zutritt von Luftsauerstoff minimiert werden kann.

Die Aufgabe wird mit einem Verfahren mit den Merkmalen des Anspruchs 1 gelöst.

Vorteilhafte Weiterbildungen sind in den jeweiligen Unteransprüchen angegeben.

Es ist eine weitere Aufgabe, eine Vorrichtung zum Durchführen des Verfahrens zu schaffen, die eine Bestrahlung unter einer gleichmäßigen Inertgas-Atmosphäre erlaubt, wirtschaftlich ist und bessere Oberflächenergebnisse der Werkstücke ergibt.

Die Aufgabe wird mit einer Vorrichtung mit den Merkmalen des Anspruchs 7 gelöst.

Vorteilhafte Weiterbildungen sind in den hiervon abhängigen Unteransprüchen gekennzeichnet.

Das erfindungsgemäße Verfahren sieht vor, die Bauteile, die der Strahlungsbehandlung ausgesetzt werden, in einzelne abgekapselte Gehäuse einzusetzen, welche strahlungsdurchlässig sind und die entsprechenden Gehäuse zu einer Strahlungsstation zu führen.

Erfindungsgemäß verfügen die Gehäuse über Inertgas-Zuleitungen und Inertgas-Ableitungen, wobei die Ableitung eines ersten Gehäuses mit der Zuleitung eines zweiten Gehäuses verbunden oder verbindbar ist. Im Bereich einer Bestrahlungsstation oder einer der Bestrahlungsstationen vorgelagerten Arbeitsstationen wird reines Inertgas einem ersten Gehäuse zugeführt, welches durch das Inertgas gespült wird. Diese Inertgas-Atmosphäre wird abgeleitet und gleichzeitig dem nächsten Gehäuse zugeleitet, das als nächstes mit der Bestrahlung an der Reihe ist. Von diesem Gehäuse wiederum geht eine Leitung zu dem in der Verfahrensreihenfolge weiter hinten liegenden Gehäuse und spült dieses mit der Inertgas-Atmosphäre der vorangegangenen zwei Gehäuse.

Dies kann in beliebiger Weise fortgeführt werden, so dass nach dem Öffnen des Gehäuses und dem Einsetzen eines einzigen oder mehrerer Bauteile (je nach Größe) das Gehäuse geschlossen wird und anschließend von der Inertgas-Atmosphäre der vorliegenden Kammern durchströmt wird.

Der Inertgas-Bedarf, der hierbei auftritt, ist gering, denn das an die Größe des Bauteils angepasste Gehäuse oder die an die Größe des Gehäuses angepasste Anzahl der Bauteile sorgen dafür, dass nur die geringe Volumendifferenz zwischen dem Gehäuse- und dem Bauteilvolumen gespült werden muss. Zudem sind die erfindungsgemäße Vorrichtung und das erfindungsgemäße Verfahren dadurch ökonomisch, dass die Spülgasatmosphäre vom Beginn des Verfahrens bis zum Ende des Verfahrens immer reiner wird und somit anfangs mit einem Inertgas mit relativ hohen Verunreinigungen gespült wird, was jedoch anfangs des Verfahrens noch ohne Bedeutung ist. Somit können beispielsweise gleichzeitig zehn in Reihe geschaltete Kammern oder Gehäuse gespült werden, wobei jedoch nur ein Zehntel des Gasvolumens am Ende austritt. Durch die Bewegung der Bauteile in die entgegengesetzte Richtung zur Inertgasströmung wird die Luftsauerstoffkonzentration an der Bestrahlungsstation am geringsten.

Vorzugsweise wird das Verfahren als Kreislaufverfahren durchgeführt, wobei die Gehäuse oder Kammern zunächst beladen werden, anschließend geschlossen werden, dann beispielsweise weiter bewegt werden und an verschiedenen Arbeitstationen eine Spülung stattfindet bis eine letzte Spülung mit Inertgas an einer Bestrahlungsstation stattfindet. Nach der Bestrahlungsstation wird die Kammer von der Inertgas-Versorgung abgekoppelt und kann geöffnet werden und dem Beladungsschritt zugeführt werden. Das Kreislaufverfahren wird in Form einer getakteten kreisförmigen Bewegung ausgeführt.

Die Kammern oder Gehäuse können hierbei beispielsweise mit einem Zuführ- und einem Abführventil verbunden sein, an welches Leitungen angesetzt werden, die jeweils das Gas der davorliegenden Kammer oder beim Bestrahlen des Gasspeichers einleiten und ausleiten.

Bei der Erfindung ist von Vorteil, dass das Spülungsverfahren besonders ökonomisch durchgeführt wird, wobei erfindungsgemäß sich mit relativ geringem Aufwand eine reine Inertgas-Atmosphäre erzielen lässt, so dass Bauteile mit einer besseren Oberflächenqualität herstellbar sind.

Die Erfindung wird beispielhaft anhand einer Zeichnung erläutert. Es zeigen dabei schematisch:
- Figur 1:: eine erste Ausführungsform einer erfindungsgemäßen Vorrichtung in einer Draufsicht;
- Figur 2:: die Vorrichtung nach Figur 1 in einer Querschnittsansicht;
- Figur 3:: eine weitere Ausführungsform der erfindungsgemäßen Vorrichtung in einer Draufsicht;
- Figur 4:: die Vorrichtung nach Figur 3 in einer Seitenansicht;
- Figur 5:: eine dritte Ausführungsform einer erfindungsgemäßen Vorrichtung in einer Draufsicht;
- Figur 6:: die Vorrichtung nach Figur 5 in einer Querschnittansicht.

Eine erfindungsgemäße Vorrichtung 1 besitzt beispielsweise einen Rundschalttisch 2. Der Rundschalttisch 2 ist kreisförmig plattenartig ausgebildet und besitzt einen Antrieb der ihn sich kontinuierlich oder getaktet um vorbestimmte Winkelmaße drehen lässt.

Auf dem Rundschalttisch 2 sind mehrere Aufnahmeeinrichtungen 3 für zu bearbeitende Werkstücke 4 vorhanden.

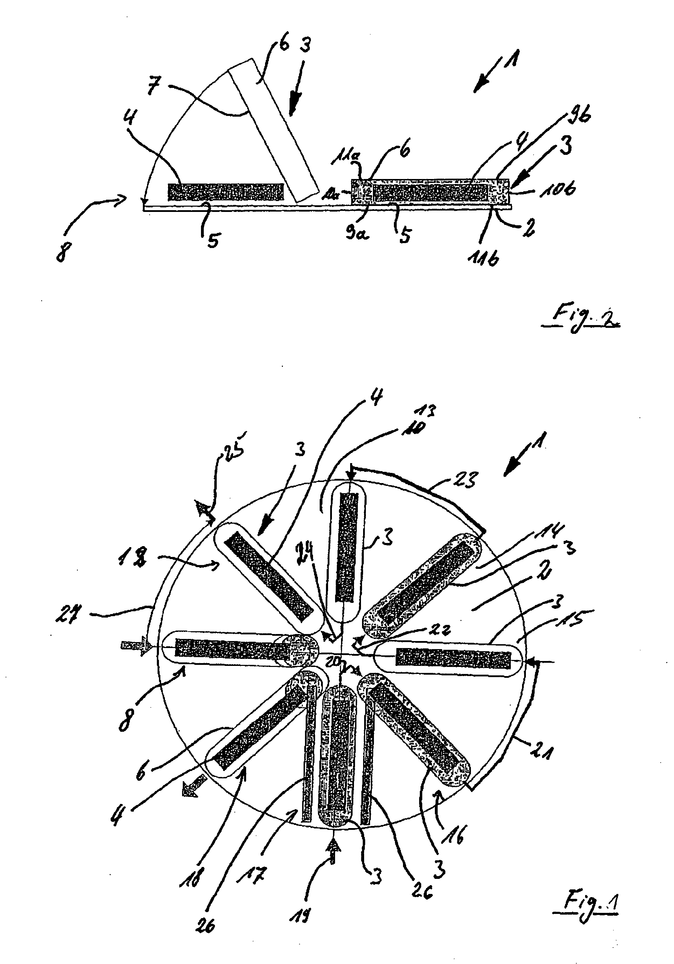

Die Aufnahmeeinrichtungen 3 sind in den Figuren 1 und 2 für längliche Werkstücke beispielsweise Automobil- oder Lkw-Achsen ausgebildet. Die Aufnahmeeinrichtungen 3 sind hierbei sternartig mit ihrer Längserstreckung nach außen weisend umfänglich auf dem Rundschalttisch 2 angeordnet.

Die Aufnahmeeinrichtungen 3 verfügen über je einen Ablagebereich 5, auf dem ein Werkstück 4 abgelegt ist und eine Haube 6 zum Abdecken des Werkstücks 4 von oben.

Der Ablagebereich 5 kann ein auf dem Rundschalttisch 2 aufgebrachter oder einstückig in diesem integrierter konturierter Bereich sein, der beispielsweise Sockel oder Aufnahmen (nicht gezeigt) zum Auflegen der Werkstücke 4 umfasst oder als Konturierung einer Ausformung umfasst, in die das Werkstück 4 eingelegt wird.

Darüber hinaus kann der Ablagebereich 5 auch schalen- oder wannenartig mit seitlich hochgezogenen Wandungsabschnitten ausgebildet sein, so dass die Werkstücke 4 hineingelegt werden. Bei einer solchen Ausführungsform ist der Bereich 5 vorzugsweise klarsichtig bzw. strahlungsdurchlässig ausgebildet.

Die Haube 6 ist bezüglich ihrer Höhe, Bereite und Länge derart ausgebildet, dass sie ein auf dem Ablagebereich 5 abgelegtes Werkstück 4 von oben vollständig abdeckt.

Die Haube 6 ist klarsichtig oder zumindest für Strahlen, mit denen eine Bestrahlung durchgeführt werden soll, durchlässig. Die Haube 6 besitzt an ihren unteren Randbereichen 7, mit denen die Haube auf dem Ablagebereich 5 bzw. dem Rundschalttisch 2 aufliegt, vorzugsweise eine umlaufende Dichtung (nicht gezeigt).

Der Rundschalttisch 2 besitzt mehrere Arbeitsstationen, die ortsfest am Rundschalttisch 2 bzw. der Vorrichtung 1 angeordnet sind.

Eine erste Arbeitsstation 8 ist die Beladestation 8. In der Beladestation 8 ist die Haube 6 vom Ablagebereich 5 abgehoben oder abgeklappt (Figur 1) und ein Werkstück 4 wird auf der Ablagestation 5 aufgelegt oder derart eingeschoben, dass die Haube 6 anschließend auf dem Ablagebereich 5 aufgelegt und geschlossen werden kann. Das Werkstück 4 befindet sich hierdurch in einem quasi geschlossenen Behältnis.

Nach dem Schließen der Haube 6 ist die Aufnahmeeinrichtung 3 hermetisch abgeschlossen und der Rundschalttisch 2 fährt getaktet um eine Position weiter, so dass die unter der Haube ruhenden Werkstücke 4 in die nächste Arbeitsstation gelangen.

Die durch den Ablagebereich 5 und die Haube 6 gebildeten Behältnisse für die Werkstücke 4 besitzen je eine Zuführleitung und eine Abführleitung für Inertgas.

Unter dem Begriff "Inertgas" wird grundsätzlich reines Inertgas, wie z.B. reiner Stickstoff oder reines CO₂ verstanden. Unter gewissen Umständen kann es jedoch auch zweckmässig sein, als Inertgas ein Gasgemisch zuzuführen, das als eine wesentliche Komponente ein Inertgas enthält.

Je nach Inertgas und verbleibendem Gasvolumen in dem durch den Ablagebereich 5 und die Haube 6 gebildeten Arbeitsraum können die Zuleitungen und Ableitungen unterschiedlich angeordnet sein.

Bei Inertgasen, die schwerer sind als die zu verdrängende Luft (zum Beispiel CO₂) ist die Zuführung bzw. die Zuführleitung an dem Ablagebereich 5 unten oder unter dem Ablagebereich 5 durch den Rundschalttisch 2 an den Positionen 9a oder 11 b angeordnet. Die entsprechende Entlüftung ist vorzugsweise schräg gegenüberliegend an den Positionen 9b oder 11a an der Haube oben angeordnet.

Bei einem Inertgas, welches leichter ist als die zu verdrängende Luft (zum Beispiel reiner Stickstoff) ist die Zuführleitung in einem oberen Bereich der Haube 6 beispielsweise an den Positionen 11a oder 9b angeordnet, während die Abführleitung in den Positionen 9a oder 11 b in einem unteren Bereich angeordnet ist.

Bei kleinen Volumina spielt die Anordnung dieser Zuführ- und Abführleitungen keine so große Rolle, so dass die Zuführleitungen auch an den gegenüberliegenden Stirnseitenbereich der Hauben 6 in den Positionen 10a und 10b angeordnet sein können (Figur 2).

Durch die getaktete Bewegung des Rundschalttisches 2 werden die Werkstücke und die sie umgebenden Behälter aus Ablagebereich 5 und Haube 6 von einer Arbeitsstation zur nächsten Arbeitsstation gefahren.

Beispielweise sind acht Behältnisse an acht Arbeitsstationen 8, 12, 13, 14, 15, 16, 17 und 18 vorhanden und ebenso viele Behältnisse aus Ablagebereich 5 und Haube 6.

Die Arbeitsstationen 8, 12, 13, 14, 15, 16, 17, und 18 sind durch unter, in, am oder auf dem Rundschalttisch 2 oder an den Hauben 6 angeordnete Leitungen so miteinander verbunden, dass Inertgas aus einem Behälter, der im Verfahren bereits weiter fortgeschritten ist, in den nachfolgenden Behälter eingeleitet wird.

Dies bedeutet, dass wenn der Rundschalttisch 2 im Uhrzeigersinn gedreht wird, das Inertgas über alle Arbeitsstationen entgegen der Uhrzeigerrichtung bis zum Ausgang hindurchgeschleust wird.

Von einer nicht gezeigten Gasversorgungseinrichtung, wie z.B. einer Flaschen-, Tank- oder Luftzerlegungsanlage, wird in einer Bestrahlungsstation 17 durch eine Zuführleitung 19 Gas in eine erste Aufnahmeeinrichtung 3 eingeführt. An einem gegenüberliegenden Ende der Aufnahmeeinrichtung 3 befindet sich eine Abführleitung 20, welche von der Aufnahmeeinrichtung 3 in der Arbeitsstation17 das Gas in eine Aufnahmeeinrichtung 3 in der bezüglich des Drehsinns davor liegenden Aufnahmeeinrichtung 3 führt. An deren gegenüberliegendem Ende ist eine Abführleitung 21 vorhanden, welche das Gas in den wieder um die Drehrichtung davor liegenden Aufnahmeeinrichtungen 3 einführt. An deren gegenüberliegendem Ende ist eine weitere Leitung 22 vorhanden, mit der das Gas aus dieser Aufnahmeeinrichtung 3 in die Nachfolgende weitergeführt wird, von wo mit einer weiteren Leitung 23 das Gas wiederum in die davor liegende Aufnahmeeinrichtung 3 geführt wird, von der eine Leitung 24 in die bezüglich der Inertgas-Versorgung letzte Aufnahmeeinrichtung 3 geführt wird, aus der entweder eine Austragsleitung 25 das Gas aus dem System ausschleust oder das Gas über die geöffneten Hauben der Beladestation und der Entladestation 18 aus dem System entweichen kann.

Das Leitungssystem aus den Leitungen 19, 20, 21, 22, 23, 24 und 25 ist am Rundschalttisch 2 ortsfest angeordnet und dreht sich somit vorzugsweise nicht mit. Die Leitungen 19 bis 25 besitzen Kopplungselemente, mit denen sie an die entsprechenden Leitungen 19 bis 25 am oder im Rundschalttisch 2 bzw. an den Aufnahmeeinrichtungen 3 koppelbar sind. Dies bedeutet, dass vor dem Weiterdrehen des Rundschalttisches 2 eine Entkopplung durchgeführt wird und nach dem Weiterdrehen eine Ankopplung durchgeführt wird und anschließend die entsprechende Spülung stattfindet. Für die Zeiträume des Drehens, bei denen kein Gas zugeführt wird, schließen die Zuleitungen der jeweiligen Aufnahmeeinrichtung 3 gasdicht. Für die Spülung wird lediglich durch die Zuleitung 19 Inertgas eingeführt, welches sowohl an der Arbeitsstation 17 eine Spülung vornimmt als auch durch die Verdrängung bereits in der Aufnahmeeinrichtung 3 an der Arbeitsstation 17 vorhandenes Gas die nachfolgende Aufnahmeeinrichtung 3 bzw. Behälter 3 verdrängt. Diese findet in dieser Weise bis zu dem ersten zu spülenden Behälter bzw. Aufnahmeeinrichtung 3 statt, aus dem die in ihm befindliche Atmosphäre, die zu diesem Zeitpunkt noch kein Inertgas enthält, zur Leitung 25 ausgeblasen wird.

Die Arbeitsstationen 12, 13, 14, 15 und 16 dienen hierbei beispielsweise ausschließlich der Spülung. In der Arbeitsstation 17 erfolgt über eine Bestrahlungseinrichtung 26 die Bestrahlung der Werkstücke 4 durch die Haube 6.

Die Strahlungseinrichtung 26 kann sich haubenartig um die Haube 6 erstrecken. Sind die Werkstücke 4 aufgeständert kann die Strahlungseinrichtung 26 so ausgebildet sein, dass sie von allen Seiten das Werkstück 4 bestrahlt.

Nach dem Bestrahlen im Arbeitsbereich 17 gelangt der Aufnahmebereich 3 mit dem entsprechenden bestrahlten Werkstück 4 in eine Entnahmestation 18, in dem die Haube 6 durch Aufklappen, Abheben oder Abziehen geöffnet wird und das fertig bestrahle Werkstück 4 entnommen werden kann.

Mit einer weiteren Drehung gelangt der leere Ablagebereich 5 in die bereits beschriebene Beladestation 8, an der der Zyklus von neuem beginnt.

Die Anzahl der Drehungen bzw. der Drehwinkel 27 richtet sich selbstverständlich nach der Anzahl der Aufnahmeeinrichtungen 3 auf dem Rundschalttisch 2.

Die Form der Aufnahmeeinrichtungen 3 ist beliebig und hängt vom Werkstück 4 ab, welches bestrahlt werden soll.

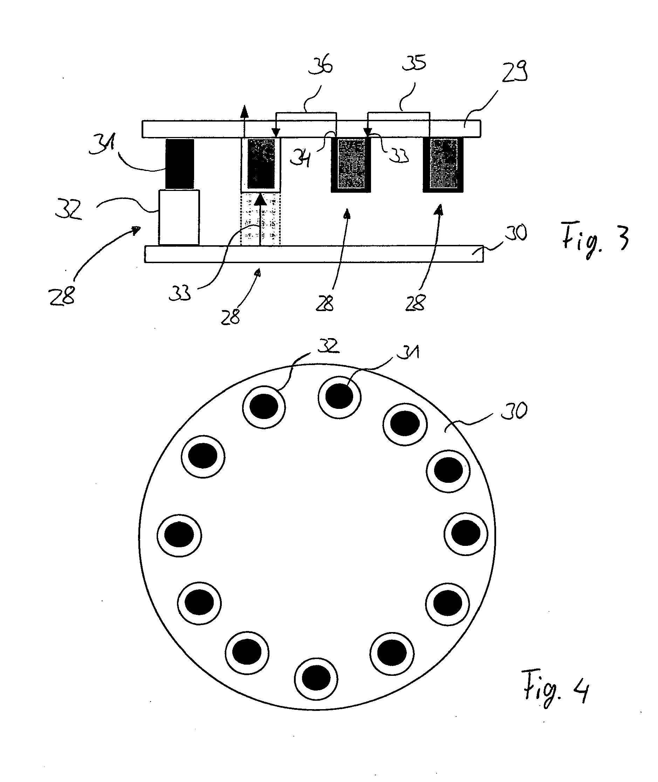

Bei einer weiteren Ausführungsform der Erfindung (Figuren 3, 4) sind wiederum mehrere Arbeitsstationen 28 an einem ersten Rundschalttisch 29 angeordnet.

Parallel zu dem ersten Rundschalttisch 29 ist ein zweiter Rundschalttisch 30 vorhanden.

Bei dieser Ausführungsform werden die Bauteile 31 am oberen Rundschalttisch 29 angehängt oder auf dem unteren Rundschalttisch 30 aufgestellt. Am jeweils gegenüberliegenden Rundschalttisch 29, 30 sind becherartige Hauben 32 angeordnet, welche jeweils von oben oder unten über die Werkstücke 32 stülpbar sind. Jede Arbeitsstation besitzt innerhalb des Bereichs der Haube 32 eine Zuführöffnung 33 für Inertgas und eine Abführöffnung 34 für Inertgas.

Die jeweiligen Leitungen 33, 34 lassen sich ebenfalls mit Zuführleitungen 35 bzw. Abführleitungen 36 mit der jeweils davor oder dahinter liegenden Haube bzw. der davor oder dahinter liegenden Arbeitsstation fluidleitend koppeln, so dass ebenfalls eine Durchströmung und -spülung entgegen der Drehrichtung stattfindet.

Auch bei dieser erfindungsgemäßen Vorrichtung können die Werkstücke 31 an einer speziellen Station übergeben und bei einer weiteren Station abgenommen werden und zudem kann bei einer dritten Station die Bestrahlung stattfinden. Die generelle Anordnung entspricht dann der ersten Ausführungsform.

Bei kleinen Werkstücken 31 und kleinen Hauben 32 können Bestrahlungseinrichtungen (nicht gezeigt) an jeder Arbeitsstation vorhanden sein, so dass an der Vorrichtung 1 nur entsprechende Entnahme und Aufgabeeinrichtungen vorhanden sein müssen. Hierbei muss für die Aufgabe und Entnahme der Werkstücke 31 keine volle Drehung durchgeführt werden, sondern kann die Entnahme dann erfolgen, wenn einerseits eine ausreichende Spülung und anschließend eine ausreichende Bestrahlung vorgenommen wurde. Bei einem großen Rundschalttisch 29 kann dies beispielsweise auch nach einer viertel Drehung bereits der Fall sein.

Bei einer hängenden Anordnung der Bauteile 31 werden die Hauben 32 beispielsweise mit einem pneumatischen oder hydraulischen Stempel 33 nach oben gegen den oberen Rundschalttisch 29 gefahren. Bei einer stehenden Anordnung der Bauelemente 31 können die Hauben 32 von oben mit einem hydraulischen oder pneumatischen Stempel einem Stellservo oder Linearmotor oder ähnlichen Antrieben abgesenkt werden.

Allen oben erläuterten Ausführungsbeispielen ist gemeinsam, dass die Strömungsrichtung des Inertgases entgegengesetzt zur Förderrichtung der Bauteile 31 erfolgt, wodurch die Restsauerstoffkonzentration in Richtung einer Belichtungsposition stetig abnimmt.

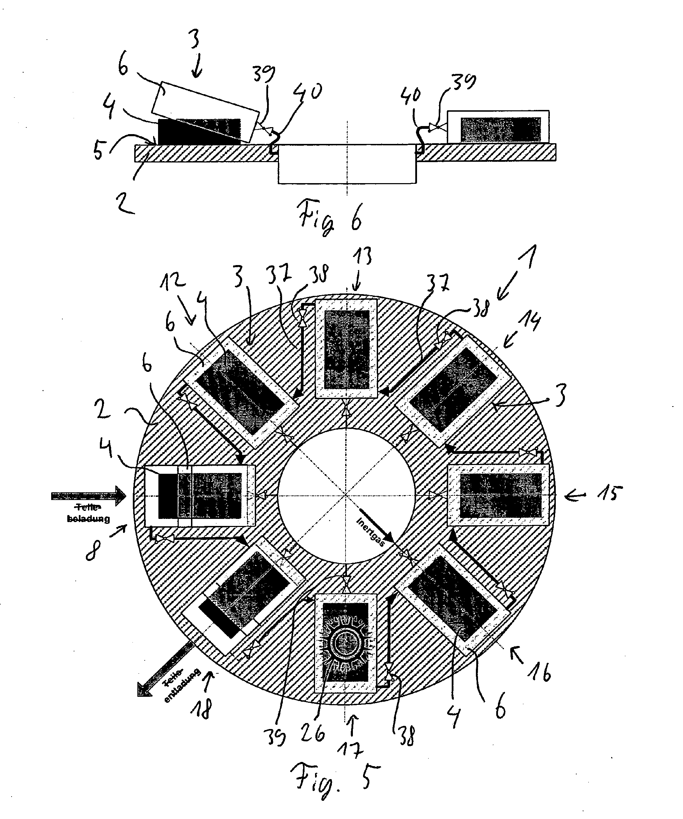

Figur 5 und 6 zeigen eine dritte Ausführungsform einer erfindungsgemäßen Vorrichtung zum Strahlungshärten von Oberflächen an Werkstücken 4, die im prinzipiellen Aufbau der Vorrichtung aus Figur 1 und 2 entspricht, weshalb gleiche Teile mit gleichen Bezugszeichen bezeichnet sind.

Auch diese dritte Ausführungsform weist einen Rundschalttisch 2 auf, mit mehreren Aufnahmeeinrichtungen 3 für zu bearbeitende Werkstücke. Die Aufnahmeeinrichtungen 3 verfügen über je einen Ablagebereich 5, auf dem die Werkstücke abgelegt werden und eine Haube 6 zum Abdecken des jeweiligen Werkstückes 4 von oben. Die benachbarten Aufnahmeeinrichtungen bzw. Arbeitsstationen 3 sind wiederum mit Leitungen kommunizierend miteinander verbunden. Bei der vorliegenden Ausführungsform sind diese Verbindungsleitungen 37 mit ihren Enden jeweils an den Hauben 6 befestigt. In den Verbindungsleitungen 37 ist jeweils ein Rückschlagventil 38 derart vorgesehen, dass zwischen zwei benachbarten Aufnahmeeinrichtungen 3 ein Strömungsfluss nur entgegen zur Drehbewegung des Rundschalttisches 2, also entgegen zur Bewegungsrichtung der Aufnahmebereiche 3 möglich ist. Weiterhin ist jede Haube 6 mit einer Leitungskupplung 39 versehen, an welche jeweils eine Zuführleitung 40 für Inertgas angekoppelt ist. Die Zuführleitungen 40 enden mit ihren von den Aufnahmeeinrichtungen 3 abgewandten Enden an einem Karussell (nicht dargestellt), das in der Position der Arbeitsstation 16 einen Durchgang zu einer Gasversorgungseinrichtung aufweist und an den übrigen Positionen die Enden der Zuführleitungen absperrt.

Die Zuführung des Inertgases kann alternativ auch mit automatisch schaltbaren Ventilen gesteuert werden. Diese Ventile sind dann in den Zuführleitungen 40 angeordnet.

Die Leitungskupplungen 39 sind jeweils mit einem Rückschlagventil derart versehen, dass über diese Leitungskupplungen 39 Inertgas in die Aufnahmeeinrichtungen 3 hinzugeführt werden kann, aber aus den Aufnahmeeinrichtungen 3 nicht mehr heraustreten kann.

Diese Vorrichtung wird gleichermaßen betrieben, wie die erste Ausführungsform, wobei jedoch, wie es oben bereits erläutert ist, die Bestrahlungsstation 17 von der Arbeitsstation 16, in der Inertgas zugeführt wird, getrennt ist, und dass hier grundsätzlich während des Zuführens von Inertgas zumindest eine der Hauben 6 der Beladestation 8 oder der Entladestation 18 geöffnet ist, damit daraus das in der Arbeitsstation 12 befindliche Inertgas an die Umwelt abgeleitet wird und kein Luft-Inertgas-Gemisch der Bestrahlungsstation 17 zugeführt wird.

Bei diesem Ausführungsbeispiel findet an der Bestrahlungsstation 17 keine Gasströmung statt. Es hat sich gezeigt, dass eine beruhigte Atmosphäre für den Härtungsvorgang von Vorteil ist.

Für alle oben erläuterten Ausführungsformen gilt, dass die Regelung des Inertgases über den Restsauerstoffgehalt in den Aufnahmeeinrichtungen 3, d.h. über einen entsprechenden Sensor in der Ausgangsleitung 25 oder unter einer jede Haube 6 erfolgen kann.

Durch die erfindungsgemäße Inertgas-Führung über die einzelnen Aufnahmeeinrichtungen 3 bzw. Container oder Gehäuse wird die Ursprungsatmosphärenverdrängung bzw. Sauerstoffverdrängung im Wesentlichen als Verdrängungsspülung und nicht als Verdünnungsspülung durchgeführt. Auch dies führt zu einer Reduzierung des Inertgasbedarfs.

Insbesondere bei der Ausführungsform nach Figuren 1, 2 und 3 können die Bauteile 4 innerhalb der transparenten Haube 6 bzw. Aufnahmeeinrichtung 3 oder Container drehbar oder schwenkbar gelagert sein, um während der UV-Bestrahlung eine gleichmäßige Strahlungsdosis an der Bauteiloberfläche zu erhalten.

Darüber hinaus ist es möglich, die UV-Strahlungseinrichtungen 26 während des Trocknungsvorganges zu bewegen. Erwünschte Schatten innerhalb der Aufnahmeeinrichtung 3 können durch eingebaute Reflektorbleche erreicht werden, ebenso wie eine verbesserte Ausleuchtung. Die Hauben 6 können hierbei volltransparent oder mit Fenstern ausgeführt werden.

Um den Wirkungsgrad weiter zu verbessern können die geschlossenen Aufnahmeeinrichtungen 3 vor der Spülung mit Inertgas einer Evakuierung unterzogen werden.

### Bezugszeichenliste:

- 1: erfindungsgemäße Vorrichtung
- 2: Rundschalttisch
- 3: Aufnahmeeinrichtungen
- 4: Werkstücke
- 5: Ablagebereich
- 6: Haube
- 7: Untere Randbereiche von 6
- 8: erste Arbeitsstation/Beladestation
- 9a: Position der Zuführleitung
- 9b: Position der Entlüftung
- 10a,b: Position der Zuführleitung
- 11 a: Position der Entlüftung
- 11 b: Position der Zuführleitung
- 12-18: Arbeitsstation
- 19: Zuführleitung
- 20: Abführleitung
- 21: Abführleitung
- 22: Leitung
- 23: Leitung
- 24: Leitung
- 25: Austragsleitung
- 26: Strahlungseinrichtung
- 27: Drehwinkel
- 28: Arbeitsstationen
- 29: Rundschalttisch
- 30: Rundschalttisch
- 31: Bauteile
- 32: Hauben
- 33: Zuführöffnung
- 34: Abführöffnung
- 35: Zuführleitungen
- 36: Abführleitungen
- 37: Verbindungsleitung
- 38: Rückschlagventil
- 39: Leitungskupplung
- 40: Zuführleitung

## Patentansprüche

1. Verfahren zum Strahlungshärten von Oberflächen an Werkstücken (4), wobei die Werkstücke (4) in einer Mehrzahl von hermetisch abschließbaren und zumindest teilbereichsweise strahlungsdurchlässigen Aufnahmeeinrichtungen (3) aufgenommen werden und nacheinander getaktet einer Strahlungseinrichtung (26) zugeführt werden, wobei die Aufnahmeeinrichtungen (3) mit den darin befindlichen Werkstücken (4) mit Inertgas gespült werden und vor dem Bestrahlen und/oder während des Bestrahlens Inertgas in eine Aufnahmeeinrichtung (3) eingeleitet wird und die Aufnahmeeinrichtung (3) mit dem Inertgas gespült wird und das durch die Spülung verdrängte Gas einer oder mehrerer sich im Arbeitszyklus davor befindlichen Aufnahmeeinrichtungen (3) zum Spülen derselben zugeführt wird.

2. Verfahren nach Anspruch 1,
**dadurch gekennzeichnet,**
**dass** aufeinanderfolgend die Schritte Beladen einer Aufnahmeeinrichtung (3) mit einem Werkstück (4), Schließen der Aufnahmeeinrichtung (3), Spülen der Aufnahmeeinrichtung (3) mit dem Spülgas zumindest einer im Arbeitstakt davor liegender Aufnahmeeinrichtung (3), Spülen der Aufnahmeeinrichtung (3) mit Inertgas aus einem Inertgas-Speicher, Bestrahlen des Werkstückes (4) und Entnehmen des Werkstückes (4) durchgeführt werden.

3. Verfahren nach Anspruch 1 oder 2,
**dadurch gekennzeichnet,**
**dass** vor dem Spülen der Aufnahmeeinrichtung (3) mit Inertgas diese Aufnahmeeinrichtung (3) geschlossen und evakuiert wird.

4. Verfahren nach einem der vorhergehenden Ansprüche 1 bis 3,
**dadurch gekennzeichnet,**
**dass** bei Inertgasen, die schwerer sind als die zu verdrängende Luft, die Zuführung bzw. die Zuführleitung an der Aufnahmeeinrichtung (3) in einem unteren Bereich und die entsprechende Entlüftung an einem oberen Bereich angeordnet ist und bei einem Inertgas, welches leichter ist als die zu verdrängende Luft, die Zuführleitung in einem oberen Bereich und die Abführleitung in einem unteren Bereich angeordnet sind.

5. Verfahren nach einem der vorhergehenden Ansprüche,
**dadurch gekennzeichnet,**
**dass** die Aufnahmeeinrichtungen (3) getaktet von Arbeitsstation zu Arbeitsstation bewegt werden, wobei in einer Bestrahlungsstation oder einer im Arbeitszyklus vorgeordneten Bestrahlungstation Inertgas der dort befindlichen Aufnahmeeinrichtung (3) zugeführt wird und in einem Arbeitsbereich, in dem die Aufnahmeeinrichtung (3), nach dem Einlegen des Werkstückes (4) geschlossen wird, das Inertgas abgeblasen wird, wobei das Inertgas durch alle dazwischen liegenden Aufnahmeeinrichtungen (3) taktweise hindurch geleitet wird.

6. Verfahren nach einem der vorhergehenden Ansprüche 1 bis 4,
**dadurch gekennzeichnet,**
**dass** die Aufnahmeeinrichtungen (3) ortsfest angeordnet sind und die aufeinanderfolgenden Arbeitsschritte an den ortsfesten Aufnahmeeinrichtungen (3) getaktet ausgeführt werden.

7. Vorrichtung zum Strahlungshärten von Oberflächen an Werkstücken (4), zum Durchführen des Verfahrens nach einem der vorhergehenden Ansprüche, wobei
mehrere hermetisch abschließbare und zumindest teilbereichsweise strahlungsdurchlässige Aufnahmeeinrichtungen (3) für zu bestrahlende Werkstücke (4) vorhanden sind und die Aufnahmeeinrichtungen (3) über Zuführleitungen und Abführleitungen zum Zuführen und Abführen von Inertgas als Spülgas für die Aufnahmeeinrichtungen (3) verfügen, wobei die Zuführleitungen und die Abführleitungen derart miteinander verbindbar sind, dass Inertgas nacheinander aufeinanderfolgende Aufnahmeeinrichtungen (3) durchströmen kann.

8. Vorrichtung nach Anspruch 7,
**dadurch gekennzeichnet,**
**dass** die Aufnahmeeinrichtungen (3) für zu bearbeitende Werkstücke (4) über je eine Strahlungseinrichtung (26) verfügen.

9. Vorrichtung nach Anspruch 7,
**dadurch gekennzeichnet,**
**dass** die Vorrichtung über eine Strahlungseinrichtung (26) verfügt, zu der die Aufnahmeeinrichtungen (3) nacheinander verfahrbar angeordnet sind.

10. Vorrichtung nach Anspruch 9,
**dadurch gekennzeichnet,**
**dass** eine Einrichtung (2) zum getakteten Verfahren der Aufnahmeeinrichtungen (3) vorhanden ist.

11. Vorrichtung nach Anspruch 9,
**dadurch gekennzeichnet,**
**dass** die Einrichtung (2) ein Rundschalttisch (2) ist.

12. Vorrichtung nach einem der Ansprüche 7 bis 11,
**dadurch gekennzeichnet,**
**dass** die Aufnahmeeinrichtungen (3) von der Einrichtung (2) getaktet von einem Arbeitsbereich (12 bis 18) zu einem nachfolgenden Arbeitsbereich getaktet verfahrbar angeordnet sind, wobei unter, in, an oder auf der Einrichtung (2) Leitungen derart vorhanden sind, dass Inertgas aus einer Aufnahmeeinrichtung (3), die im Verfahren weiter fortgeschritten ist, in die nachfolgende Aufnahmeeinrichtung (3) einleitbar ist.

13. Vorrichtung nach Anspruch 12,
**dadurch gekennzeichnet,**
**dass** die Einrichtung (2) zum getakteten Bewegen der Aufnahmeeinrichtungen (3) einerseits und die Leitungen zum Leiten von Inertgas andererseits derart angeordnet sind, dass das Inertgas gegen die Drehrichtung oder Bewegungsrichtung der Einrichtung (2) durch die Aufnahmeeinrichtung (3) führbar ist.

14. Vorrichtung nach einem der Ansprüche 8 bis 13,
**dadurch gekennzeichnet,**
**dass** ein Leitungssystem aus Leitungen (19 bis 25) zum Führen von Inertgas an dem Rundschalttisch (2) ortsfest angeordnet ist und die Leitungen (19 bis 25) Kopplungselemente besitzen, mit denen sie an Zuführ- und Abführleitungen der Aufnahmeeinrichtungen (3) nach deren getakteten Drehen und Einnehmen einer Position koppelbar sind.

15. Vorrichtung nach einem der Ansprüche 8 bis 13,
**dadurch gekennzeichnet,**
**dass** zwischen benachbarten Arbeitsbereichen (3) jeweils Verbindungsleitungen (37) vorgesehen sind, in welchen jeweils ein Rückschlagventil (38) derart angeordnet ist, dass Gas von einer im Arbeitszyklus vorgelagerten Aufnahmeeinrichtung (3) zu einem Arbeitszyklus nachgeordneten Aufnahmeeinrichtung (3) strömen kann.

16. Vorrichtung nach Anspruch 15,
**dadurch gekennzeichnet,**
**dass** an eine jede Aufnahmeeinrichtung (3) eine Zuführleitung (40) zum Zuführen des Inertgases angeschlossen ist.

## Claims

1. A process for the radiation curing of surfaces on workpieces (4), wherein the workpieces (4) are accommodated in a plurality of hermetically closable accommodation means (3) which are pervious to radiation at least in partial areas and, one after the other, are fed to a radiation means (26) in a clocked fashion, wherein the accommodation means (3) with the workpieces (4) located therein are flushed with inert gas and, prior to the radiation and/or during the radiation, inert gas is introduced into an accommodation means (3) and the accommodation means (3) is flushed with the inert gas and the gas displaced by the flushing is fed to one or several accommodation means (3) located upstream of it in the working cycle for flushing the same.

2. The process according to claim 1,
**characterized in that**
the steps of the loading of an accommodation means (3) with a workpiece (4), closing of the accommodation means (3), flushing of the accommodation means (3) with the flush gas of at least one accommodation means (3) located upstream of it in the working cycle, flushing of the accommodation means (3) with inert gas from an inert gas reservoir, radiating the workpiece (4) and removing the workpiece (4) are consecutively carried out.

3. The process according to claim 1 or 2,
**characterized in that**,
prior to the flushing of the accommodation means (3) with inert gas, this accommodation means (3) is closed and evacuated.

4. The process according to any of the preceding claimed 1 to 3,
**characterized in that**,
in the case of inert gases that are heavier than the air to be displaced, the feeding to and/or the feed line on the accommodation means (3) is displaced in lower portion and the corresponding deaeration is displaced in an upper portion and, in the case of an inert gas, which is lighter than the air to be displaced, the feed line is disposed in an upper portion and the withdrawal line is disposed in a lower portion.

5. The process according to any of the preceding claims,
**characterized in that**
the accommodation means (3) are moved from working station to working station in a clocked fashion, wherein, in a radiation station or a radiation station disposed upstream of the working station inert gas is fed to the accommodation means (3) located there, and the inert gas is blown off in a working area, in which the accommodation means (3) is closed after the insertion of the workpiece (4), wherein the inert gas is passed through all intermediate accommodation means (3) in a clocked fashion.

6. The process according to any of the preceding claims 1 to 4,
**characterized in that**
the accommodation means (3) are stationarily disposed and the consecutive working steps are carried out at the stationary accommodation means (3) in a clocked fashion.

7. A device for the radiation curing of surfaces on workpieces (4) for carrying out the process according to any of the preceding claims, wherein several hermetically closable accommodation means (3) which are pervious to radiation at least in partial areas for workpieces (4) to be irradiated are present and the accommodation means (3) have feed lines and withdrawal lines for the feeding and withdrawal of inert gas as the flush gas for the accommodation means (3), wherein the feed lines and the withdrawal lines can be connected with each other in such a way that inert gas can flow in succession through consecutive accommodation means (3).

8. The device according to claim 7,
**characterized in that**
the accommodation means (3) for the workpieces (4) to be processed have one radiation means (26) each.

9. The device according to claim 7,
**characterized in that**
the device has one radiation means (26) with respect to which the accommodation means (3) are disposed in a successively movable fashion.

10. The device according to claim 9,
**characterized in that**
there is a means (2) for the clocked moving of the accommodation means (3).

11. The device according to claim 9,
**characterized in that**
the means (2) is a rotary indexing table (2).

12. The device according to any of claims 7 to 11,
**characterized in that**
the accommodation means (3) are disposed so that they can be moved in a clocked fashion by the means (2) from one working area (12 to 18) to a subsequent working area, wherein lines are present under, in, at or on the means (2) in such a way that inert gas can be introduced from an accommodation means (3) which is more advanced in the process into the subsequent accommodation means (3).

13. The device according to claim 12,
**characterized in that** the means (2) for the clocked movement of the accommodation means (3), on the one hand, and the lines for guiding inert gas, on the other hand, are disposed such that the inert gas can be guided against the direction of rotation or the direction of movement of the means (2) through the accommodation means (3).

14. The device according to any of claims 8 to 13,
**characterized in that**
a line system consisting of lines (19 to 25) for guiding inert gas is stationarily disposed on the rotary indexing table (2)and the lines (19 to 25) have coupling elements with which they can be coupled to feed and withdrawal lines of the accommodation means (3) after their clocked rotating and occupying of a position.

15. The device according to any of claims 8 to 13,
**characterized in that**
connection lines (37) are in each case provided between adjacent working areas (3), in which, in each case, a check valve (38) is disposed in such a way that gas can flow from an accommodation means (3) located upstream as regards the working cycle to an accommodation means (3) located downstream of a working cycle.

16. The device according to claim 15,
**characterized in that**
a feed line (40) for feeding the inert gas is connected to each accommodation means (3).

## Revendications

1. Procédé de durcissement par rayonnement de surfaces sur des pièces (4), les pièces (4) étant reçues dans une pluralité de dispositifs de réception (3) pouvant être fermés hermétiquement et laissant passer le rayonnement au moins dans des zones partielles et étant alimentées successivement de manière cadencée vers un dispositif de rayonnement (26), les dispositifs de réception (3) avec les pièces (4) s'y trouvant étant rincés par du gaz inerte, du gaz inerte étant introduit, avant l'irradiation et/ou pendant l'irradiation, dans un dispositif de réception (3) et le dispositif de réception (3) étant rincé par le gaz inerte et le gaz refoulé par le rinçage étant alimenté vers un ou plusieurs dispositifs de réception (3) situés en amont dans le cycle de travail, pour le rinçage de ces derniers.

2. Procédé selon la revendication 1, **caractérisé par le fait que** sont réalisées successivement les étapes consistant à charger un dispositif de réception (3) avec une pièce (4), fermer le dispositif de réception (3), rincer le dispositif de réception (3) par le gaz de rinçage d'au moins un dispositif de réception (3) situé en amont dans le cycle de travail, rincer le dispositif de réception (3) par du gaz inerte d'un réservoir à gaz inerte, irradier la pièce (4) et prélever la pièce (4).

3. Procédé selon la revendication 1 ou 2, **caractérisé par le fait que**, avant le rinçage du dispositif de réception (3) par du gaz inerte, ce dispositif de réception (3) est fermé et évacué.

4. Procédé selon l'une des revendications précédentes 1 à 3, **caractérisé par le fait que**, dans le cas de gaz inertes qui sont plus lourds que l'air à refouler, l'alimentation ou le conduit d'alimentation vers le dispositif de réception (3) est disposé dans une zone inférieure et la purge d'air correspondante est disposée dans une zone supérieure et que, dans le cas d'un gaz inerte qui est plus léger que l'air à refouler, l'alimentation est disposée dans une zone supérieure et le conduit d'évacuation est disposé dans une zone inférieure.

5. Procédé selon l'une des revendications précédentes, **caractérisé par le fait que** les dispositifs de réception (3) sont déplacés de manière cadencée d'un poste de travail à l'autre, dans un poste de rayonnement ou dans un poste de rayonnement disposé en amont dans le cycle de travail étant alimenté du gaz inerte vers le dispositif de réception (3) s'y trouvant et, dans une zone de travail dans laquelle le dispositif de réception (3) est fermé après le placement de la pièce (4), le gaz inerte est évacué, le gaz inerte étant guidé de manière cadencée à travers tous les dispositifs de réception (3) situés entre ces derniers.

6. Procédé selon l'une des revendications précédentes 1 à 4, **caractérisé par le fait que** les dispositifs de réception (3) sont disposés stationnaires et que les étapes de travail successives sont réalisées de manière cadencée aux dispositifs de réception (3) stationnaires.

7. Dispositif de durcissement par rayonnement de surfaces sur des pièces (4), pour la mise en oeuvre du procédé selon l'une des revendications précédentes, plusieurs dispositifs de réception (3), pouvant être fermés hermétiquement et laissant passer le rayonnement au moins dans des zones partielles, des pièces à irradier (4) étant présentes et les dispositifs de réception (3) disposant de conduits d'alimentation et de conduits d'évacuation pour l'alimentation et l'évacuation de gaz inerte comme gaz de rinçage pour les dispositifs de réception (3), les conduits d'alimentation et les conduits d'évacuation pouvant être reliés entre eux de sorte que du gaz inerte puisse successivement traverser des dispositifs de réception (3) successifs.

8. Dispositif selon la revendication 7, **caractérisé par le fait que** les dispositifs de réception (3) des pièces à usiner (4) disposent, chacun, d'un dispositif de rayonnement (26).

9. Dispositif selon la revendication 7, **caractérisé par le fait que** le dispositif dispose d'un dispositif de rayonnement (26) vers lequel les dispositifs de réception (3) sont disposés déplaçables l'un après l'autre.

10. Dispositif selon la revendication 9, **caractérisé par le fait qu'**est présent un dispositif (2) destiné à déplacer de manière cadencée les dispositifs de réception (3).

11. Dispositif selon la revendication 9, **caractérisé par le fait que** le dispositif (2) est un plateau de commande circulaire (2).

12. Dispositif selon l'une des revendications 7 à 11, **caractérisé par le fait que** les dispositifs de réception (3) sont disposés déplaçables de manière cadencée par le dispositif (2) d'une zone de travail (12 à 18) vers une zone de travail suivante, sous, dans, au ou sur le dispositif (2) étant présents des conduits de sorte que du gaz inerte d'un dispositif de réception (3) plus avancé dans le procédé puisse être introduit dans le dispositif de réception (3) suivant.

13. Dispositif selon la revendication 12, **caractérisé par le fait que** le dispositif (2) de déplacement cadencé des dispositifs de réception (3), d'une part, et les conduits de conduction de gaz inerte, d'autre part, sont disposés de sorte que le gaz inerte puisse être guidé à travers le dispositif de réception (3) dans le sens opposé au sens de rotation ou au sens de déplacement du dispositif (2).

14. Dispositif selon l'une des revendications 8 à 13, **caractérisé par le fait qu'**un système de conduits composé de conduits (19 à 25) de guidage de gaz inerte est disposé stationnaire au plateau de commande circulaire (2) et que les conduits (19 à 25) possèdent des éléments de couplage par lesquels ils peuvent être couplés à des conduits d'alimentation et d'évacuation des dispositifs de réception (3) après leur rotation cadencée et adoption d'une position.

15. Dispositif selon l'une des revendications 8 à 13, **caractérisé par le fait qu'**entre des zones de travail (3) adjacentes sont chaque fois prévus des conduits de connexion (37) dans chacun desquels est disposé un clapet de retenue (38) de sorte que du gaz puisse s'écouler d'un dispositif de réception (3) disposé en amont dans le cycle de travail vers un dispositif de réception (3) disposé en aval dans un cycle de travail.

16. Dispositif selon la revendication 15, **caractérisé par le fait qu'**à chaque dispositif de réception (3) est raccordé un conduit d'alimentation (40) pour l'alimentation du gaz inerte.
